# FASCICULE DE BREVET EUROPEEN

(11) **EP 2 674 270 B1**
(45) Date de publication et mention de la délivrance du brevet: **03.02.2016**
(21) Numéro de dépôt: 13171596.3
(22) Date de dépôt: 12.06.2013
(51) Int. Cl.: B27M 3/00, B27D 1/10

(54) **Elément de garnissage présentant une face d'aspect formée en partie par un matériau ligneux**
Einsatzelement mit einer Sichtseite, die zum Teil aus Holzmaterial gebildet wird
Trim element having a visible face formed in part by a wood material

(30) Priorité: 14.06.2012 FR 1255558
(43) Date de publication de la demande: 18.12.2013
(73) Titulaire: Faurecia Intérieur Industrie, 92000 Nanterre (FR)
(72) Inventeur: Piccin, Hugo, 81247 MÜNCHEN (DE); Durand, Nathalie, 01500 AMBERIEU EN BUGEY (FR)
(74) Mandataire: Domenego, Bertrand

(56) Documents cités:
- EP-A1- 1 816 018
- DE-U1- 29 808 139
- US-A- 3 671 984

## Description

La présente invention concerne un élément de garnissage du type selon le préambule de la revendication 1. Un tel élément est connu du document US 3 671 984 A1.

Afin d'améliorer l'aspect des éléments de garnissage, tels que des panneaux de porte ou des revêtements de planche de bord de véhicule ou autre, il peut être souhaité de réaliser une couche de décor dont la face externe, visible depuis l'extérieur de l'élément de garnissage, est réalisée en deux matériaux différents dont l'un est un matériau ligneux, tel que du bois. Ainsi, il peut par exemple être souhaité d'associer une couche de bois avec une peau en cuir ou autre pour réaliser l'habillage de véhicules hauts de gamme.

Cependant, l'utilisation d'une couche de bois est très contraignante du fait de sa faible malléabilité et il est difficile de la fixer avec une couche d'un autre matériau en assurant une transition harmonieuse entre la couche de bois et la couche de l'autre matériau. De plus, il est nécessaire que cette fixation entre la couche de bois et la couche de l'autre matériau n'entraîne pas une dégradation du bois, par exemple en créant des fissures ou des éclats dans la couche de bois.

Pour réaliser la fixation de la couche de bois et de la couche en autre matériau, la solution la plus simple est de coller ces couches ensemble. Cependant l'utilisation d'une colle ne donne pas entière satisfaction. En effet, les matériaux formant la colle peuvent être polluants. En outre, le poids de l'élément de garnissage obtenu est augmenté du fait de la présence de colle qui doit être disposée sur toute la zone de jonction entre la couche de bois et l'autre couche pour assurer une bonne fixation de ces couches. L'emploi dé colle peut en outre entraîner des défauts d'aspect au niveau de la jonction entre les couches si celles-ci sont mal alignées ou se déplacent pendant l'opération de collage ou si la colle est apparente entre les deux couches.

L'un des buts de l'invention est de pallier ces inconvénients en proposant un élément de garnissage dont la couche de décor est formée de deux matériaux, dont l'un est un matériau ligneux, et dans laquelle l'assemblage des deux matériaux se fait de façon simple en préservant l'intégrité de la couche de matériau ligneux et en assurant une jonction harmonieuse entre les couches sans utiliser de colle.

A cet effet, l'invention concerne un élément de garnissage du type précité, dans lequel la couche de décor comprend en outre au moins une couche supplémentaire réalisée en un matériau différent du matériau ligneux, l'endroit de la couche supplémentaire s'étendant sensiblement dans la continuité de l'endroit du complexe, ladite couche supplémentaire et ledit complexe étant fixés l'un à l'autre par au moins une couture.

L'utilisation d'un complexe comprenant la couche de matériau ligneux et d'une couche de renfort permet de rendre la couche de matériau ligneux plus fine et plus souple, la rendant ainsi propre à être cousue sans endommager le matériau ligneux, alors que cela n'était pas possible avec les couches de matériaux ligneux de l'art antérieur. La couture des couches ensemble permet d'assurer une fixation des couches n'alourdissant pas l'élément de garnissage, n'utilisant pas de matériau polluant et permettant d'améliorer l'esthétique de l'élément de garnissage, soit en rendant la couture invisible soit en utilisant cette couture comme une couture d'aspect.

Selon d'autres caractéristiques de l'élément de garnissage selon l'invention :
- la couture traverse l'ensemble du complexe et notamment à la couche de matériau ligneux ;
- la couture s'étend sensiblement parallèlement à la couche de décor ou sensiblement perpendiculairement à celle-ci ;
- l'élément de garnissage comprend en outre au moins une couche de support, ladite couche s'étendant sur l'envers de la couche de décor ;
- la couture fixant la couche supplémentaire et le complexe s'étend du côté de l'envers de la couche de décor et est enrobée par la couche de support ;
- la couche de support est formée par un matériau composite comprenant des fibres naturelles noyées dans un matériau plastique ;
- l'élément de garnissage comprend en outre une couche de mousse s'étendant du côté de l'envers de la couche de décor ;
- la couche de mousse s'étend sur l'envers de la couche de support ;
- la couche supplémentaire comprend une zone de fixation de la couche de décor dans un outil de réalisation de l'élément de garnissage, ladite zone de fixation étant disposée à distance du complexe ; et
- la couche supplémentaire est réalisée en cuir ou succédané de cuir, matériau textile, matériau plastique ou forme un complexe de différentes couches en tels matériaux.

D'autres aspects et avantages de l'invention apparaîtront à la lecture de la description qui suit, donnée à titre d'exemple et faite en références aux dessins annexés, dans lesquels :
- la Fig. 1 est une représentation schématique en coupe d'une partie d'une couche de décor d'un élément de garnissage selon l'invention,
- la Fig. 2 est une représentation schématique en coupe d'une partie d'un élément de garnissage selon un mode de réalisation de l'invention, et
- la Fig. 3 est une représentation schématique en coupe d'une partie d'un élément de garnissage selon un autre mode de réalisation de l'invention.

Dans la description, les termes « interne » et « externe » sont définis par rapport à l'orientation de l'élément de garnissage lorsqu'il est disposé dans un véhicule, le terme « interne » désignant ce qui est destiné à être tourné vers la caisse du véhicule et à n'être pas visible des occupants du véhicule et le terme « externe » désignant ce qui est destiné à être vers l'intérieur de l'habitacle du véhicule. Le terme « endroit » désigne le côté d'un élément tourné vers l'extérieur et le terme « envers » désigne le côté d'un élément tourné vers l'intérieur.

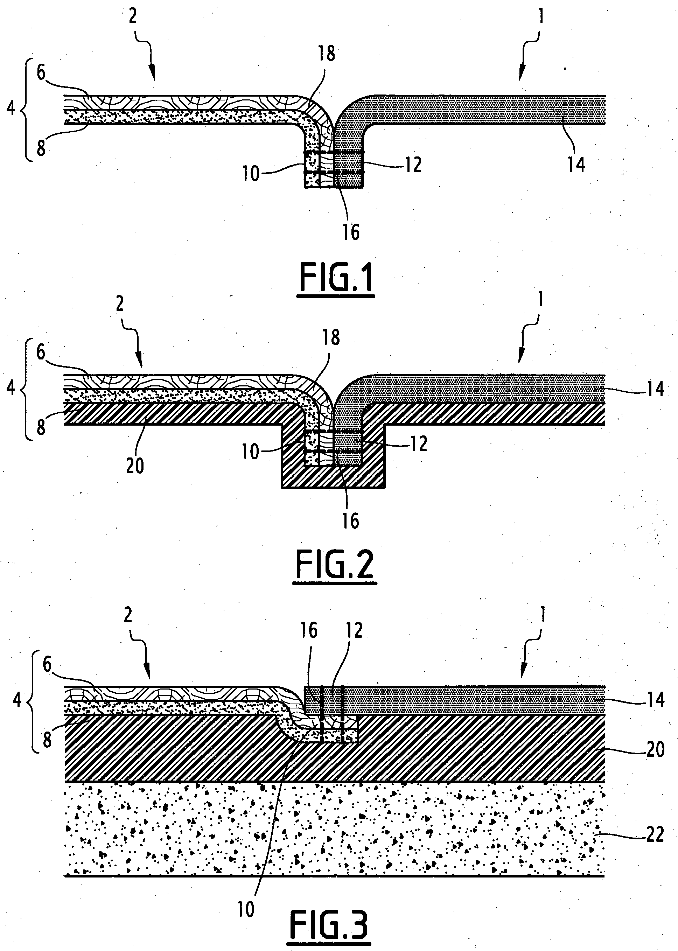

En référence à la Fig. 1, on décrit une couche de décor 1 d'un élément de garnissage 2 comprenant au moins deux couches formées de matériaux différents et destinées à constituer la face externe de l'élément de garnissage 2, de sorte à obtenir un élément de garnissage 2 présentant au moins deux aspects différents.

L'une des deux couches est formée par un complexe 4, comprenant au moins, de l'extérieur vers l'intérieur, une couche de matériau ligneux 6 et une couche de renfort 8.

La couche de matériau ligneux 6 est par exemple formée par une couche de bois naturel ou une superposition de couches de bois. La couche de matériau ligneux 6 est suffisamment fine pour présenter une certaine souplesse et ainsi être apte à être mise en forme tridimensionnelle. La couche de matériau ligneux 6 présente par exemple une épaisseur sensiblement comprise entre 0,1 mm et 0,8 mm.

La couche de renfort 8 s'étend directement sur l'envers de la couche de matériau ligneux 6 et est formée par un matériau souple. Par souple, on entend que la couche de renfort 8 n'est pas rigide et peut être mise en forme.

Le matériau de la couche de renfort est par exemple un textile, tel qu'un tissé ou non-tissé ou du papier ou du carton ou bien encore un film plastique.

La couche de matériau ligneux 6 et la couche de renfort 8 sont assemblées ensemble, par exemple par collage, et forment ainsi un complexe 4 souple qui peut être mis en forme pour former une partie d'un élément de garnissage. L'épaisseur totale du complexe 4 est par exemple comprise entre 0,5 mm et 3 mm.

La finesse du complexe 4 et, en particulier celle du matériau ligneux 6, permet à des aiguilles de traverser le complexe sans endommager la couche de matériau ligneux 6, c'est-à-dire sans créer de fissures ou d'éclats autour des perforations crées par une aiguille traversant le complexe 4. On comprend donc que le complexe 4 est apte à être cousu avec un autre élément sans être dégradé. On notera qu'avant d'être cousu, le complexe 4 peut éventuellement subir un traitement de flexibilisation afin d'améliorer encore ses capacités à ne pas être dégradé lors de la couture. Un tel traitement de flexibilisation est par exemple un traitement thermique ou un traitement par micro-ondes permettant d'assouplir la couche de matériau ligneux 6.

Selon un mode de réalisation non représenté, le complexe 4 comprend en outre une couche de revêtement, par exemple un vernis, recouvrant l'endroit de la couche de matériau ligneux 6. La couche de revêtement est agencée pour protéger la couche de matériau ligneux 6, notamment contre les radiations ultraviolet pouvant entraîner un vieillissement accéléré de la couche de matériaux ligneux 6. La couche de revêtement est en outre agencée pour laisser la couche de matériau ligneux 6 visible depuis l'extérieur de l'élément de garnissage en étant translucide ou transparent. La couche de revêtement forme donc l'endroit du complexe 4 et elle peut en outre être utilisée pour modifier l'aspect de l'élément de garnissage, par exemple en étant colorée. Le revêtement est également agencé pour ne pas être dégradé lors de la couture.

La forme du complexe 4, qui peut être obtenue par découpe de celui-ci, est quelconque et choisie en fonction de l'utilisation de l'élément de garnissage et de la place qu'occupe le complexe 4 dans la face d'aspect de cet élément. Au moins une partie de sa périphérie 10 est cousue à au moins une partie de la périphérie 12 d'une couche supplémentaire 14, destinée à former une autre partie de la face d'aspect de l'élément de garnissage, comme cela va à présent être décrit.

La couche supplémentaire 14 peut être de toute nature adaptée à être cousue avec le complexe 4. La couche supplémentaire 14 est également apte à être mise en forme, comme le complexe 4, et à être cousue sans être dégradée. La couche supplémentaire 14 est par exemple une couche de cuir ou succédané de cuir, de matériau textile, de matériau plastique, tel qu'une couche de polyéthylène téréphtalate (TEP), ou autre, ou une superposition de couches formées de l'un ou de plusieurs des matériaux indiqués ci-dessus. L'endroit de la couche supplémentaire 14 s'étend sensiblement dans la continuité de l'endroit du complexe 4, c'est-à-dire que le complexe 4 et la couche supplémentaire 14 sont assemblées l'une à l'autre de sorte à former une surface sensiblement continue en dehors de la zone de jonction entre le complexe 4 et la couche supplémentaire 14.

Une partie de la périphérie 10 du complexe 4 est assemblée à une partie de la périphérie 12 de la couche supplémentaire 14 par au moins une couture 16, traversant toute l'épaisseur du complexe 4 et de la couche supplémentaire 14. Le fil utilisé pour réaliser la couture 16 peut être tout fil adapté pour assurer une fixation robuste entre le complexe 4 et la couche supplémentaire 14. La couture 16 est également agencée pour assurer l'étanchéité entre le complexe 4 et la couche supplémentaire 14, c'est-à-dire pour empêcher le passage de toute matière entre les périphéries 10 et 12 de ces couches de l'envers vers l'endroit ou de l'endroit vers l'envers de la couche de décor 1.

Selon un mode de réalisation, représenté sur les Fig. 1 et 2, la couture 16 est complètement invisible de l'extérieur de l'élément de garnissage 2. Pour ce faire, les parties de périphéries 10 et 12 destinées à être cousues ensemble sont pliées du côté de l'envers de la couche de décor 1 par rapport au reste du complexe 4 et de la couche supplémentaires 14, de sorte à former deux rebords s'étendant l'un en face de l'autre du côté de l'envers de la couche de décor 1. Ces deux rebords sont cousus ensemble par une couture 16 s'étendant sensiblement parallèlement à la couche de décor 1, comme représenté sur les Fig. 1 et 2. Selon un mode de réalisation non représenté, le complexe 4 et la partie de sa périphérie 10 repliée forment entre eux un pli 18 dont le rayon de courbure est supérieur ou égal à 4 mm, ce qui offre une transition propre et nette entre la couche de matériau ligneux 6 et la couche supplémentaire 14 lorsque celles-ci sont cousues ensemble, de sorte que l'aspect de l'élément de garnissage 2 est amélioré.

Selon un autre mode de réalisation représenté sur la Fig. 3, la couture 16 est visible depuis l'extérieur de l'élément de garnissage et forme une couture d'aspect conférant un aspect particulier à l'élément de garnissage 2. Dans ce cas, la partie de la périphérie 10 du complexe 4, respectivement de la couche supplémentaire 14, est agencée pour passer sous la partie de la périphérie 12 de la couche supplémentaire 14, respectivement du complexe 4 et ces parties sont cousues ensemble par une couture 16 s'étendant sensiblement perpendiculairement à la couche de décor 1, comme représenté sur la Fig. 3.

De préférence, la couture 16 s'étend sur toute la zone de jonction entre le complexe 4 et la couche supplémentaire 14.

Il est bien sûr envisageable de coudre le complexe 4 et/ou la couche supplémentaire 14 à encore au moins une autre couche supplémentaire ou un autre complexe de sorte à former une couche de décor 1 présentant l'aspect, la forme et les dimensions voulus.

La couche supplémentaire 14 peut avantageusement être utilisée pour former des zones fonctionnelles, qui seraient plus coûteuses à réaliser dans la couche de matériau ligneux 6. Ainsi, la couche supplémentaire 14 peut comprendre une zone de fixation de la couche de décor 1 dans un outil de réalisation de l'élément de garnissage. Cette zone de fixation est par exemple formée par des oreilles permettant d'accrocher la couche de décor 1 dans l'outil de réalisation et enlevées ensuite ou masquées, lorsque l'élément de garnissage 1 est fini. Ces oreilles peuvent être pratiquées dans une zone de la couche supplémentaire éloignée de la zone de jonction avec le complexe 4, ce qui réduit les risques d'endommager la couche de décor 2 dans la zone d'intérêt de celle-ci, c'est-à-dire dans une zone visible, lors d'éventuelles opérations de finition, comme le retrait des oreilles de fixation. On réduit aussi les coûts de fabrication de l'élément de garnissage en réduisant la quantité de matériau ligneux à la stricte quantité nécessaire pour réaliser le complexe 4 formant une partie de la face d'aspect de l'élément de garnissage, sans nécessiter de zones supplémentaires destinées à être retirées de, ou masquées dans, l'élément de garnissage fini.

La couche de décor 1 décrite ci-dessus peut former un élément de garnissage à elle seule en étant appliquée directement sur une structure à garnir.

Selon le mode de réalisation représenté sur les Fig. 2 et 3, l'élément de garnissage 2 comprend cependant en outre au moins une couche de support 20 s'étendant sur l'envers de tout ou partie de la couche de décor 1. La couche de support 20 est par exemple sensiblement rigide et permet de maintenir la couche de décor 1 en forme et de rigidifier l'élément de garnissage 2.

La couche de support 20 enrobe la zone de jonction entre le complexe 4 et la couche supplémentaire 14, comme représenté sur les Fig. 2 et 3, et enrobe notamment la couture 16. Un tel enrobage permet d'améliorer encore l'étanchéité de la zone de jonction, la couche de support 20 formant une barrière sur l'envers de la zone de jonction.

La couche de support 20 est par exemple réalisée en un matériau composite comprenant des fibres naturelles noyées dans un matériau plastique. Un tel matériau composite est connu sous la dénomination NFC (natural fibre composite en anglais, ou composite en fibres naturelles). Les fibres naturelles sont par exemples formées par des fibres de bois ou de lin ou autre. Les fibres de matériau plastique sont par exemple des fibres de polypropylène (PP) et/ou de polyéthylène téréphtalate (PET) et sont fondues en enrobant les fibres naturelles pour former un ensemble cohérent, dans lequel les fibres naturelles sont liées entre elles par le matériau plastique.

La couche de support 20 présente par exemple une épaisseur sensiblement égale à 2 mm. Cette épaisseur n'est pas nécessairement constante et peut par exemple être réduite dans la zone d'enrobage de la jonction entre le complexe 4 et la couche supplémentaire 14 afin de former un élément de garnissage d'épaisseur constante. Selon une variante non représentée, la couture 16 peut être agencée pour coudre également la couche de support 20 avec le complexe 4 et la couche supplémentaire 14 en particulier lorsque la couche de support 20 présente une densité inférieure à 1.

La couche de support 20 est fixée à la couche de décor 1 de façon connue, par exemple par surmoulage de la couche de support 20 sur l'envers de la couche de décor 1 ou par assemblage par compression entre la couche de support 20 et la couche de décor 1.

Selon un mode de réalisation représenté sur la Fig. 3, l'élément de garnissage 2 peut comprendre en outre, en plus de la couche de support 20 ou à la place de celle-ci, une couche de mousse 22 s'étendant sur l'envers de la couche de support 20 ou de la couche de décor 1. Une telle couche de mousse est classique dans ce type d'application. Elle peut être réalisée par moussage d'un matériau précurseur de mousse sur l'envers de la couche de support 20, qui sert alors de couche d'étanchéité empêchant la mousse de passer vers l'endroit de la couche de décor 1, ou sur l'envers de la couche de décor 1, lorsque la couture 16 suffit à assurer l'étanchéité de la zone de jonction entre le complexe 4 et la couche supplémentaire 14.

L'élément de garnissage 1 décrit ci-dessus présente un aspect particulier, permettant de donner une esthétique « haut de gamme » à la structure qui est garnie avec. L'élément de garnissage 1 est peu coûteux, moins polluant et simple à produire. Il peut présenter une épaisseur et une masse réduites par rapport aux éléments de garnissage de l'art antérieur.

## Revendications

1. Elément de garnissage (2) comprenant au moins une couche de décor (1) comprenant au moins un complexe (4) formé d'une couche de matériau ligneux (6), comprenant un envers et un endroit, et d'une couche de renfort (8), s'étendant sur l'envers de la couche de matériau ligneux (6), **caractérisé en ce que** la couche de décor (1) comprend en outre au moins une couche supplémentaire (14) réalisée en un matériau différent du matériau ligneux, l'endroit de la couche supplémentaire (14) s'étendant sensiblement dans la continuité de l'endroit du complexe (4), ladite couche supplémentaire (14) et ledit complexe (4) étant fixés l'un à l'autre par au moins une couture (16).

2. Elément de garnissage selon la revendication 1, **caractérisé en ce que** la couture (16) traverse l'ensemble du complexe (4) et notamment à la couche de matériau ligneux (6).

3. Elément de garnissage selon la revendication 1 ou 2, **caractérisé en ce que** la couture (16) s'étend sensiblement parallèlement à la couche de décor (1) ou sensiblement perpendiculairement à celle-ci.

4. Elément de garnissage selon l'une quelconque des revendications 1 à 3, **caractérisé en ce qu'**il comprend en outre au moins une couche de support (20), ladite couche s'étendant sur l'envers de la couche de décor (1).

5. Elément de garnissage selon la revendication 4, **caractérisé en ce que** la couture (16) fixant la couche supplémentaire (14) et le complexe (4) s'étend du côté de l'envers de la couche de décor (1) et est enrobée par la couche de support (20).

6. Elément de garnissage selon la revendication 4 ou 5, **caractérisé en ce que** la couche de support (20) est formée par un matériau composite comprenant des fibres naturelles noyées dans un matériau plastique.

7. Elément de garnissage selon l'une quelconque des revendications 1 à 6, **caractérisé en ce qu'**il comprend en outre une couche de mousse (22) s'étendant du côté de l'envers de la couche de décor (1).

8. Elément de garnissage selon la revendication 7, lorsqu'elle dépend de l'une des revendications 4 à 6, **caractérisé en ce que** la couche de mousse (22) s'étend sur l'envers de la couche de support (20).

9. Elément de garnissage selon l'une quelconque des revendications 1 à 8, **caractérisé en ce que** la couche supplémentaire (14) comprend une zone de fixation de la couche de décor (1) dans un outil de réalisation de l'élément de garnissage (2), ladite zone de fixation étant disposée à distance du complexe (4).

10. Elément de garnissage selon l'une quelconque des revendications 1 à 9, **caractérisé en ce que** la couche supplémentaire (14) est réalisée en cuir ou succédané de cuir, matériau textile, matériau plastique ou forme un complexe de différentes couches en tels matériaux.

## Patentansprüche

1. Packungselement (2), welches mindestens eine Dekorschicht (1) aufweist, welche mindestens einen Komplex (4) aufweist, welcher aus einer Schicht aus Holzmaterial (6), welche eine Rückseite und eine Oberseite aufweist, und einer Verstärkungsschicht (8) gebildet wird, welche sich auf der Rückseite der Schicht aus Holzmaterial (6) erstreckt, **dadurch gekennzeichnet, dass** die Dekorschicht (1) weiterhin mindestens eine zusätzliche Schicht (14) aus einem Material aufweist, welches unterschiedlich von dem Holzmaterial ist, wobei sich die Stelle der zusätzlichen Schicht (14) im wesentlichen in der Kontinuität der Stelle des Komplexes (4) erstreckt, wobei die zusätzliche Schicht (14) und der Komplex (4) durch mindestens eine Naht (16) aneinander befestigt sind.

2. Packungselement nach Anspruch 1, **dadurch gekennzeichnet, dass** die Naht (16) die Gesamtheit des Komplexes (4), insbesondere an der Schicht aus Holzmaterial (6) durchdringt.

3. Packungselement nach Anspruch 1 oder 2, **dadurch gekennzeichnet, dass** die Naht (16) sich im Wesentlichen parallel zu der Dekorschicht (1) oder im Wesentlichen senkrecht dazu erstreckt.

4. Packungselement nach einem der Ansprüche 1 bis 3, **dadurch gekennzeichnet, dass** es weiterhin mindestens eine Stützschicht (20) aufweist, wobei die Schicht sich auf der Rückseite der Dekorschicht (1) erstreckt.

5. Packungselement nach Anspruch 4, **dadurch gekennzeichnet, dass** die Naht (16), welche die zusätzliche Schicht (14) und der Komplex (4) befestigt, sich in Richtung der Rückseite der Dekorschicht (1) erstreckt und von der Trägerschicht (20) ummantelt ist.

6. Packungselement nach Anspruch 4 oder 5, **dadurch gekennzeichnet, dass** die Trägerschicht (29) aus einem Verbundmaterial gebildet ist, aufweisend natürliche Fasern, welche in einem Kunststoffmaterial eingebettet sind.

7. Packungselement nach einem der Ansprüche 1 bis 6, **dadurch gekennzeichnet, dass** sie weiterhin eine Schaumschicht (22) aufweist, die sich in Richtung der Rückseite der Dekorschicht (1) erstreckt.

8. Packungselement nach Anspruch 7, sofern rückbezogen auf einen der Ansprüche 4 bis 6, **dadurch gekennzeichnet, dass** die Schaumschicht (22) sich auf der Rückseite der Trägerschicht (20) erstreckt.

9. Packungselement nach einem der Ansprüche 1 bis 8, **dadurch gekennzeichnet, dass** die zusätzliche Schicht (14) einen Befestigungsbereich der Dekorschicht (1) in einer Ausführungsform des Packungselements (2) aufweist, wobei der Befestigungsbereich entfernt von dem Komplex (4) angeordnet ist.

10. Packungselement nach einem der Ansprüche 1 bis 9, **dadurch gekennzeichnet, dass** die zusätzliche Schicht (14) aus Leder oder Kunstleder, Textilmaterial, Kunststoffmaterial ist oder einen Komplex aus verschiedenen Schichten aus solchen Materialien bildet.

## Claims

1. An lining element (2) comprising at least one decorative layer (1) comprising at least one complex (4) formed by a ligneous material layer (6) comprising a backside and a front side, and a reinforcement layer (8), extending over the backside of the ligneous material layer (6), **characterized in that** the decorative layer (1) further comprises at least one additional layer (14) made in a material different from the ligneous material, the front side of the additional layer (14) substantially extending in the continuity of the front side of the complex (4), said additional layer (14) and said complex (4) being attached to each other through at least one seam (16).

2. The lining element according to claim 1, **characterized in that** the seam (16) crosses the whole of the complex (4) and notably at the ligneous material layer (6).

3. The lining element according to claim 1 or 2, characterize in that the seam (16) extends substantially parallel to the decorative layer (1) or substantially perpendicular to the latter.

4. The lining element according to any of claims 1 to 3, **characterized in that** it further comprises at least one supporting layer (20), said layer extending over the backside of the decorative layer (1).

5. The lining element according to claim 4, **characterized in that** the seam (16) attaching the additional layer (14) and the complex (4) extends on the backside of the decorative layer (1) and is coated with the supporting layer (20).

6. The lining element according to claim 4 or 5, **characterized in that** the supporting layer (20) is formed by a composite material comprising natural fibers embedded in a plastic material.

7. The lining element according to any of claims 1 to 6, **characterized in that** it further comprises a foam layer (22) extending on the backside of the decorative layer (1).

8. The lining element according to claim 7, when it depends on one of claims 4 to 6, **characterized in that** the foam layer (22) extends over the backside of the supporting layer (20).

9. The lining element according to any of claims 1 to 8, **characterized in that** the additional layer (14) comprises an area for attachment of the decorative layer (1) in a tool for manufacturing the lining element (2), said attachment area being positioned at a distance from the complex (4).

10. The lining element according to any of claims 1 to 9, **characterized in that** the additional layer (14) is made in leather or in a leather substitute, a textile material, a plastic material or forms a complex of different layers in such materials.
